# DEMANDE DE BREVET EUROPEEN

(11) **EP 4 755 557 A1**
(43) Date de publication de la demande: **10.06.2026**
(21) Numéro de dépôt: 25220506.7
(22) Date de dépôt: 03.12.2025
(51) Int. Cl.: B23B 51/00, B23B 5/16

(54) **OUTIL D'ALÉSAGE POUR UN TUYAU PLASTIQUE**

(30) Priorité: 03.12.2024 FR 2413349
(71) Demandeur: Giacometti, Olivier, 13400 Aubagne (FR)
(72) Inventeur: Giacometti, Olivier, 13400 Aubagne (FR)
(74) Mandataire: Germain Maureau

(57) **Abrégé**

Outil d'alésage (1) pour un tuyau plastique, comprenant :
- un corps (2) présentant successivement une première section cylindrique (21) et une seconde section cylindrique (22) centrées sur un axe central, dans lequel la première section cylindrique présente un premier diamètre et la seconde section cylindrique présente un second diamètre inférieur au premier diamètre, et dans lequel une entaille est ménagée dans le corps ; et
- une lame de coupe (3) fixée sur la première section cylindrique, au niveau de l'entaille, dans lequel ladite lame de coupe présente une arête de coupe en affleurement avec une périphérie de la première section cylindrique pour un alésage selon le premier diamètre ;
dans lequel la première section cylindrique présente un plateau (24) duquel saille un arbre d'accouplement (4) muni de deux sections hexagonales (41, 42) successives.

## Description

### [Domaine technique]

L'invention se rapporte à un outil d'alésage pour un tuyau plastique.

Elle se rapporte plus particulièrement à un outil d'alésage pour aléser l'intérieur d'une extrémité femelle d'un tuyau plastique dans lequel est collé une extrémité mâle d'un autre tuyau plastique.

L'invention trouve une application favorite, et non limitative, dans le domaine de la plomberie, pour une réparation d'un tuyau plastique utilisé pour une alimentation en eau ou une évacuation d'eau, et en particulier un tuyau en polychlorure de vinyle ou PVC.

### [Etat de la technique]

De manière connue, deux tuyaux plastique, et en particulier deux tuyaux PVC, peuvent être assemblés bout à bout par collage. Pour ce faire, le premier tuyau plastique présente une extrémité dite femelle tandis que le second tuyau plastique présente une extrémité dite mâle propre à être emboîtée à l'intérieur de l'extrémité femelle du premier tuyau ; l'extrémité mâle ayant un diamètre externe sensiblement équivalent au diamètre interne de l'extrémité femelle.

Avant emboîtement, l'extrémité femelle est enduite intérieurement de colle et/ou l'extrémité mâle est enduite extérieurement de colle, de sorte que les deux extrémités sont emboitées et collées l'une dans l'autre. On parle alors d'un raccord entre deux tuyaux.

Cependant, dans le domaine de la plomberie, il est souvent nécessaire de réparer des fuites au niveau de tels tuyaux plastique, et parfois aux niveau d'un raccord entre deux tuyaux. Une telle réparation nécessite parfois de couper les deux extrémités emboitées et collées, pour ensuite placer un manchon de raccordement ; les deux extrémités ne pouvant en effet pas être décollées et donc séparées l'une de l'autre.

Cependant, il est parfois très problématique de sectionner les deux extrémités emboitées et collées, pour des raisons notamment de longueur disponible pour le manchon de raccordement.

En effet, un tel sectionnement conduit immanquablement à raccourcir les deux tuyaux, et une fois ces deux extrémités coupées, l'un des deux tuyaux peut ne pas avoir de longueur disponible suffisante pour recevoir un manchon de raccordement, par exemple à cause d'un coude ou d'un té trop proche.

### [Résumé]

L'invention vise à répondre à ce problème, en proposant une solution qui permet de ne pas avoir couper les deux extrémités emboitées et collées.

A cette fin, l'invention propose un outil d'alésage pour un tuyau plastique, comprenant :
- un corps présentant successivement une première section cylindrique et une seconde section cylindrique centrées sur un axe central, dans lequel la première section cylindrique présente un premier diamètre et la seconde section cylindrique présente un second diamètre qui est inférieur au premier diamètre, et dans lequel une entaille est ménagée dans le corps sur la première section cylindrique et sur la seconde section cylindrique ; et
- une lame de coupe fixée sur la première section cylindrique du corps, au niveau de l'entaille, dans lequel ladite lame de coupe présente une arête de coupe sensiblement en affleurement avec une périphérie de la première section cylindrique pour un alésage selon sensiblement le premier diamètre ;

dans lequel la première section cylindrique présente un plateau, opposé à la seconde section cylindrique, et sur lequel est prévu un moyen d'accouplement avec un outil, ce moyen d'accouplement étant formé d'un arbre d'accouplement pour un accouplement avec un mandrin d'une perceuse, dans lequel l'arbre d'accouplement présente successivement en partant du plateau :
   - une première section d'arbre hexagonal ayant une première largeur ; et
   - une seconde section d'arbre hexagonal ayant une seconde largeur inférieure à la première largeur ;
de sorte que ledit arbre d'accouplement est adapté pour un accouplement avec deux mandrins de tailles différentes.

Ainsi, un plombier va pouvoir couper l'extrémité mâle du second tuyau plastique à ras de l'extrémité femelle du premier tuyau plastique. Il restera alors une portion de l'extrémité mâle collée à l'intérieur de l'extrémité femelle.

Le plombier peut alors utiliser l'outil d'alésage, en commençant par l'accoupler à une visseuse munie d'un mandrin, avec l'avantage de pouvoir s'accoupler sur deux mandrins de tailles différentes ce qui permet de travailler avec deux perceuses distinctes et donc d'avoir une grande flexibilité pour le plombier. Il poursuit ensuite en, engageant la seconde section cylindrique de l'outil d'alésage à l'intérieur de cette portion de l'extrémité mâle ; le second diamètre étant sensiblement équivalent au diamètre interne de cette extrémité mâle. La seconde section cylindrique permet donc un centrage de l'outil d'alésage.

Le plombier peut ensuite actionner la perceuse et donc mettre en rotation l'outil d'alésage, de sorte que la lame de coupe rabote la portion de l'extrémité mâle ; le premier diamètre, ou diamètre d'alésage, étant sensiblement équivalent au diamètre interne de l'extrémité femelle. En avançant l'outil d'alésage, ce dernier rabote entièrement la portion de l'extrémité mâle, de sorte qu'à la fin l'extrémité femelle retrouve sensiblement son état initial, c'est-à-dire son état avant l'emboîtement et le collage de l'autre tuyau plastique.

Ainsi, une fois l'alésage terminé, l'extrémité femelle du premier tuyau plastique peut à nouveau recevoir l'extrémité mâle d'un autre tuyau plastique.

Grâce à cet outil d'alésage, le plombier n'a pas eu à sectionner le premier tuyau plastique, ce qui est avantageux si ce premier tuyau plastique était trop court et n'offrait pas de longueur disponible pour un manchon de raccordement.

Par ailleurs, le fait de prévoir un arbre d'accouplement avec deux sections d'arbre hexagonal consécutives et de largeurs distinctes permet une grande adaptabilité dans le choix de la perceuse ; étant noté que la largeur d'une section d'arbre hexagonal correspond à sa largeur mesurée entre deux faces latérales opposées et parallèles.

Ce mode de réalisation est particulièrement avantageux, car il permet de fabriquer plusieurs outils d'alésage avec le même arbre d'accouplement pour un accouplement avec deux tailles de mandrin de perceuse, réduisant ainsi les coûts de fabrication et l'encombrement.

L'arête de coupe est sensiblement en affleurement avec la périphérie de la première section cylindrique, dans le sens où elle est en affleurement avec la périphérie de la première section cylindrique ou elle dépasse au maximum d'un ou deux millimètres de la périphérie de la première section cylindrique. Ainsi, cette arête de coupe permet un alésage selon sensiblement le premier diamètre, c'est-à-dire selon le premier diamètre ou selon le premier diamètre augmenté d'au maximum un ou deux millimètres.

Selon une caractéristique, l'arbre d'accouplement vient de matière avec le corps pour former ensemble une pièce monobloc. Une telle conception monobloc permet d'avoir un outil d'alésage fiable et durable. En variante, l'arbre d'accouplement est soudé sur le corps.

Selon une possibilité, la première section d'arbre hexagonal présente une première longueur, et la seconde section d'arbre hexagonal présente une seconde longueur qui est équivalente à la première longueur à plus ou moins 5 %.

Le fait d'avoir des longueurs équivalentes ou sensiblement équivalentes favorise l'accouplement sur le mandrin, sans gêne que l'on s'accouple avec la première section d'arbre hexagonal ou que l'on s'accouple avec la seconde section d'arbre hexagonal.

Selon une autre possibilité, la première longueur est comprise entre 10 et 20 millimètres, et par exemple entre 10 et 15 millimètres.

L'invention se rapporte également à un outil d'alésage pour un tuyau plastique, comprenant :
- un corps présentant successivement une première section cylindrique et une seconde section cylindrique centrées sur un axe central, dans lequel la première section cylindrique présente un premier diamètre et la seconde section cylindrique présente un second diamètre qui est inférieur au premier diamètre, et dans lequel une entaille est ménagée dans le corps sur la première section cylindrique et sur la seconde section cylindrique ; et
- une lame de coupe fixée sur la première section cylindrique du corps, au niveau de l'entaille, dans lequel ladite lame de coupe présente une arête de coupe sensiblement en affleurement avec une périphérie de la première section cylindrique pour un alésage selon sensiblement le premier diamètre ;
dans lequel la première section cylindrique présente un plateau, opposé à la seconde section cylindrique, et sur lequel est prévu un moyen d'accouplement avec un outil, ce moyen d'accouplement étant formé d'un orifice taraudé pour un accouplement avec une tige filetée d'une disqueuse ou meuleuse à disque.

Le plombier peut alors utiliser l'outil d'alésage, comme précédemment décrit, sauf que cette fois il peut l'accoupler à une disqueuse ou meuleuse à disque munie d'une tige filetée ; une telle tige filetée recevant habituellement un disque. De cette manière, si le plombier n'a sous la main qu'une disqueuse ou meuleuse à disque, il peut s'en servir pour utiliser son outil d'alésage.

Selon une caractéristique, cet outil d'alésage comprend un manchon fixé solidairement sur le plateau et dans lequel est ménagé l'orifice taraudé.

Ainsi, c'est à l'intérieur de ce manchon qu'est vissée la tige filetée de la disqueuse ou meuleuse à disque.

Selon une autre caractéristique, la première largeur est de 10 millimètres, et la seconde largeur est de 13 millimètres.

Selon une possibilité, le corps est réalisé dans un matériau plastique, un matériau composite, un matériau à base de résine ou un matériau métallique, comme par exemple de l'aluminium.

Selon une autre possibilité, le corps est une pièce monobloc.

Grâce à la réalisation de l'outil d'alésage, il est possible de concevoir le corps par moulage, usinage ou impression 3D.

Selon une autre caractéristique, le premier diamètre et le second diamètre sont choisis parmi les couples de diamètres suivants, à plus ou moins 1 millimètre :
- premier diamètre = 32 millimètres et second diamètre = 25 millimètres ;
- premier diamètre = 40 millimètres et second diamètre = 33 millimètres ;
- premier diamètre = 42,6 millimètres et second diamètre = 50 millimètres ;
- premier diamètre = 50 millimètres et second diamètre = 43 millimètres ;
- premier diamètre = 53,6 millimètres et second diamètre = 63 millimètres ;
- premier diamètre = 63 millimètres et second diamètre = 56 millimètres ;
- premier diamètre = 80 millimètres et second diamètre = 73 millimètres ;
- premier diamètre = 90 millimètres et second diamètre = 83 millimètres ;
- premier diamètre = 100 millimètres et second diamètre = 93 millimètres ;
- premier diamètre = 110 millimètres et second diamètre = 103 millimètres ;
- premier diamètre = 125 millimètres et second diamètre = 118 millimètres ;
- premier diamètre = 160 millimètres et second diamètre = 153 millimètres.

Ces dimensions sont particulièrement adaptées pour les diamètres des tuyaux PVC servant à amener et évacuer des eaux, ainsi que pour les tuyaux PVC pression adaptés aux systèmes d'approvisionnement en eau, d'irrigation ou encore aux installations industrielles.

L'invention se rapporte également à un kit d'alésage comprenant plusieurs outils d'alésage selon l'invention, dans lequel le premier diamètre de la première section cylindrique de chacun des outils d'alésage varie d'un outil d'alésage à l'autre, le moyen d'accouplement étant identique dans sa forme et dans ses dimensions entre les outils d'alésage.

Selon une possibilité, les plusieurs outils d'alésage sont ceux munis de l'arbre d'accouplement avec les deux sections d'arbre hexagonal consécutives pour une perceuse, et l'arbre d'accouplement est le même (même longueur, mêmes dimensions) pour chacun des outils d'alésage.

Selon une possibilité, les plusieurs outils d'alésage sont ceux munis de l'orifice taraudé pour une disqueuse ou meuleuse à disque, et l'orifice taraudé est le même (même diamètre, même profondeur) pour chacun des outils d'alésage.

Ainsi, grâce à l'invention, un même outil (par exemple une même perceuse ou une même disqueuse ou meuleuse à disque) pourra être utilisé avec tous les outils d'alésage.

Dans une réalisation particulière, le premier diamètre et le second diamètre d'au moins deux des outils d'alésage du kit d'alésage sont choisis parmi les couples de diamètres suivants, à plus ou moins 1 millimètre :
- premier diamètre = 32 millimètres et second diamètre = 25 millimètres ;
- premier diamètre = 40 millimètres et second diamètre = 33 millimètres ;
- premier diamètre = 42,6 millimètres et second diamètre = 50 millimètres ;
- premier diamètre = 50 millimètres et second diamètre = 43 millimètres ;
- premier diamètre = 53,6 millimètres et second diamètre = 63 millimètres ;
- premier diamètre = 63 millimètres et second diamètre = 56 millimètres ;
- premier diamètre = 80 millimètres et second diamètre = 73 millimètres ;
- premier diamètre = 90 millimètres et second diamètre = 83 millimètres ;
- premier diamètre = 100 millimètres et second diamètre = 93 millimètres ;
- premier diamètre = 110 millimètres et second diamètre = 103 millimètres ;
- premier diamètre = 125 millimètres et second diamètre = 118 millimètres ;
- premier diamètre = 160 millimètres et second diamètre = 153 millimètres.

### [Brève description des figures]

D'autres caractéristiques et avantages de la présente invention apparaîtront à la lecture de la description détaillée ci-après, d'exemples de mise en œuvre non limitatifs, faite en référence aux figures annexées dans lesquelles :
La Figure 1 est une vue schématique en perspective d'un outil d'alésage avec arbre d'accouplement illustré selon deux angles de vue et sans sa lame de coupe, et avec un zoom en bas à gauche illustrant la lame de coupe en place sur le corps de l'outil d'alésage ;
La Figure 2 est une vue schématique de côté et en coupe selon le plan A-A de l'outil d'alésage de la figure 1, sans sa lame de coupe ;
La Figure 3 est une vue schématique de dessus et de dessous de l'outil d'alésage de la figure 1, sans sa lame de coupe ;
La Figure 4 est une vue schématique en perspective d'un outil d'alésage avec arbre d'accouplement selon deux angles de vue et sans sa lame de coupe, cet outil d'alésage étant de plus grande taille comparativement à celui de la figure 1 ;
La Figure 5 est une vue schématique en perspective d'un outil d'alésage avec arbre d'accouplement selon deux angles de vue et sans sa lame de coupe, cet outil d'alésage étant de plus grande taille comparativement à ceux de la figure 1 et de la figure 4 ;
La Figure 6 est une vue schématique en perspective de deux outils d'alésage avec orifice taraudé, sans leur lame de coupe, ces deux outils d'alésage étant de tailles différentes ;
La Figure 7 est une vue schématique en coupe axiale de deux tuyaux assemblés, comprenant un premier tuyau plastique ayant une extrémité femelle à l'intérieur de laquelle est emboîtée et encollée une extrémité mâle d'un second tuyau plastique ;
La Figure 8 est une vue schématique en coupe axiale des deux tuyaux de la figure 7, après avoir coupé le second tuyau au niveau à ras de l'extrémité femelle du premier tuyau ;
La Figure 9 est une vue schématique en coupe axiale des deux tuyaux de la figure 8, où un outil d'alésage avec arbre d'accouplement selon l'une des figures 1, 4 et 5 est engagé à l'intérieur de l'extrémité mâle du second tuyau plastique, cet outil d'alésage ayant un premier diamètre équivalent au diamètre interne du premier tuyau plastique et un second diamètre équivalent au diamètre interne du second tuyau plastique, et où l'arbre d'accouplement est accouplé à un mandrin d'une perceuse ;
La Figure 10 est une vue schématique en coupe axiale du premier tuyau après que la lame de coupe de l'outil d'alésage ait complètement raboté l'extrémité mâle du second tuyau ;
La Figure 11 est une vue schématique du premier tuyau à la fin de l'opération d'alésage, sans l'extrémité mâle du second tuyau qui a été rabotée ;

### [Description détaillée en référence aux figures]

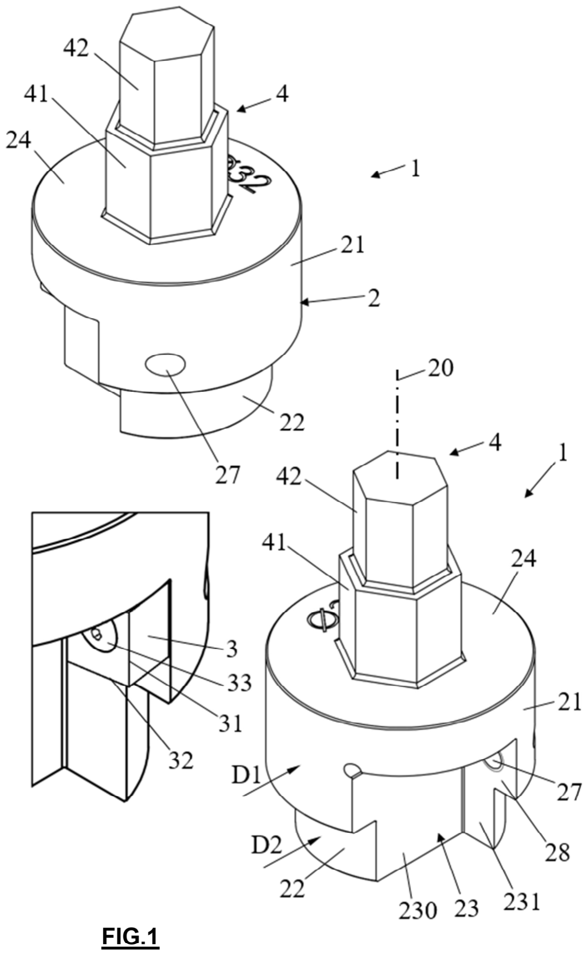

En référence aux figures 1 à 6, un outil d'alésage 1 comprend un corps 2 présentant successivement une première section cylindrique 21 et une seconde section cylindrique 22 centrées sur un axe central 20. Ce corps 2 est réalisé sous la forme d'une pièce monobloc, et il peut être réalisé par usinage, moulage ou impression 3D. Ce corps 2 est par exemple réalisé dans un matériau plastique, un matériau composite, un matériau à base de résine ou un matériau métallique, tel que l'aluminium ou l'acier.

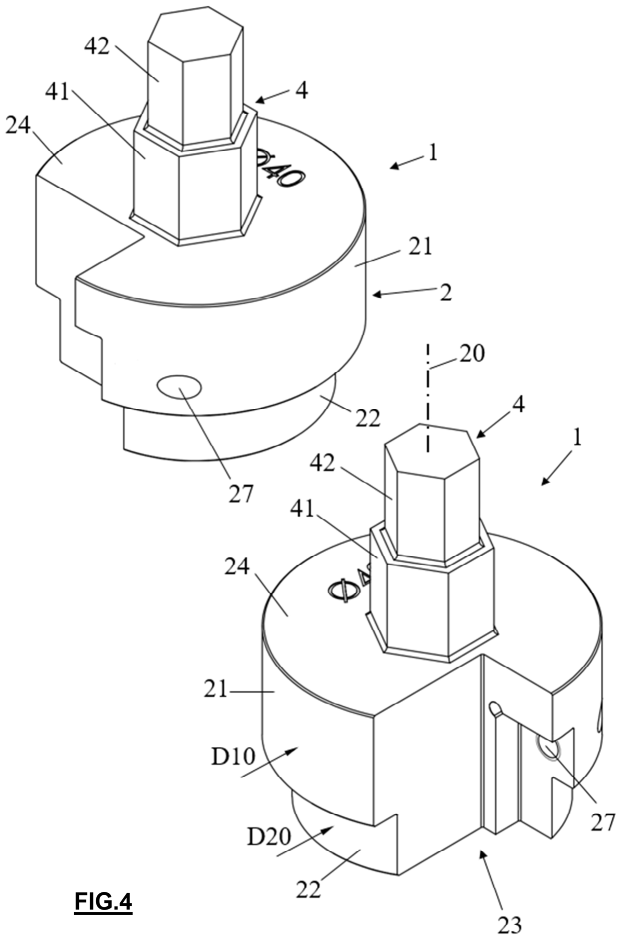

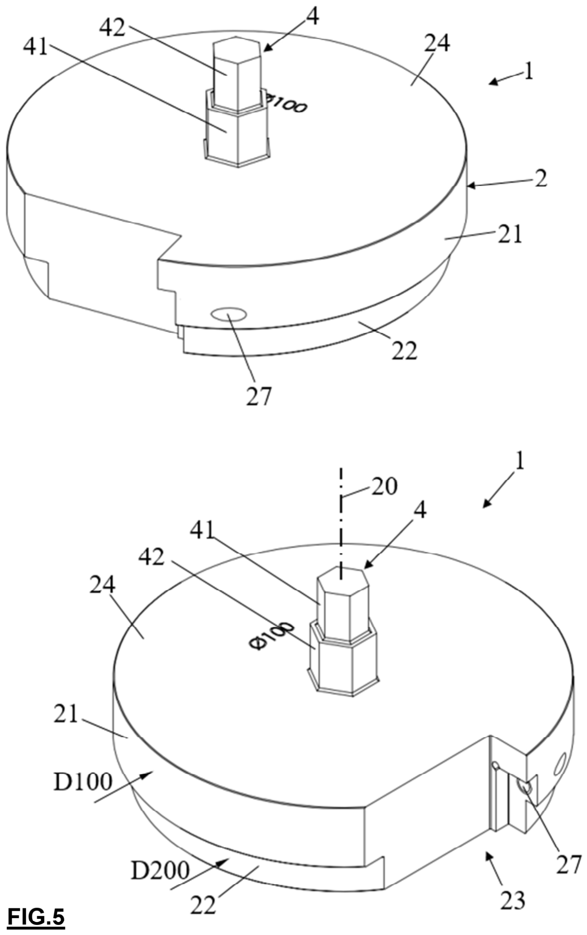

La première section cylindrique 21 présente un premier diamètre D1 pour l'outil d'alésage 1 de la figure 1, D10 pour l'outil d'alésage 1 de la figure 4 et D100 pour l'outil d'alésage 1 de la figure 5. La seconde section cylindrique 22 présente un second diamètre D2 pour l'outil d'alésage 1 de la figure 1, D20 pour l'outil d'alésage 1 de la figure 4 et D200 pour l'outil d'alésage 1 de la figure 5.

Quel que soit l'outil d'alésage 1, le second diamètre D2 (respectivement D20 ou D200) est inférieur au premier diamètre D1 (respectivement D10 ou D100).

Dans l'exemple de la Figure 1, le premier diamètre D1 est de 32 millimètres et le second diamètre D2 est de 25 millimètres, à plus ou moins 1 millimètre pour chaque diamètre ; une gravure ∅32 étant ménagée sur le corps 2 pour indiquer la valeur du premier diamètre.

Dans l'exemple de la Figure 4, le premier diamètre D10 est de 40 millimètres et le second diamètre D20 est de 33 millimètres, à plus ou moins 1 millimètre pour chaque diamètre ; une gravure ∅40 étant ménagée sur le corps 2 pour indiquer la valeur du premier diamètre.

Dans l'exemple de la Figure 5, le premier diamètre D100 est de 100 millimètres et le second diamètre D200 est de 93 millimètres, à plus ou moins 1 millimètre pour chaque diamètre ; une gravure ∅100 étant ménagée sur le corps 2 pour indiquer la valeur du premier diamètre.

Une entaille 23 est ménagée dans le corps 2 sur la première section cylindrique 21 et sur la seconde section cylindrique 22. Cette entaille 23 s'étend sur toute la hauteur du corps 2, et elle est délimitée par deux pans 230, 231 qui sont perpendiculaires l'un à l'autre, et qui sont tous deux parallèle à l'axe central 20.

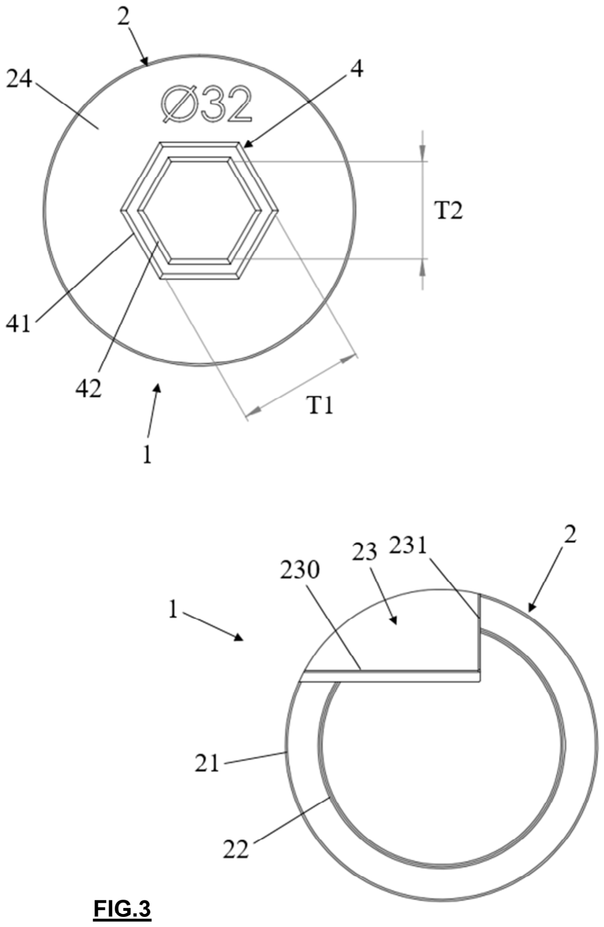

La première section cylindrique 21 présente un plateau 24 qui est plat et qui est opposé à la seconde section cylindrique 22. Un arbre d'accouplement 4, centré sur l'axe central 20, fait saillie du plateau 24 et vient de matière avec le corps 2. Cet arbre d'accouplement 4 présente successivement en partant du plateau 24 :
- une première section d'arbre hexagonal 41 ayant une première largeur T1 (voir Figure 3) ; et
- une seconde section d'arbre hexagonal 42 ayant une seconde largeur T2 (voir Figure 3) inférieure à la première largeur T1.

Ainsi, cet arbre d'accouplement 4 forme un moyen d'accouplement avec un mandrin d'une perceuse et, grâce aux deux sections 41, 42 de largeurs distinctes, cet arbre d'accouplement 4 permet de s'accoupler sur un premier mandrin (de grande taille) avec la première section d'arbre hexagonal 41, et également de s'accoupler sur un second mandrin (de petite taille) avec la seconde section d'arbre hexagonal 42. En d'autres termes, cet arbre d'accouplement 4 est adapté pour un accouplement avec deux mandrins de tailles différentes.

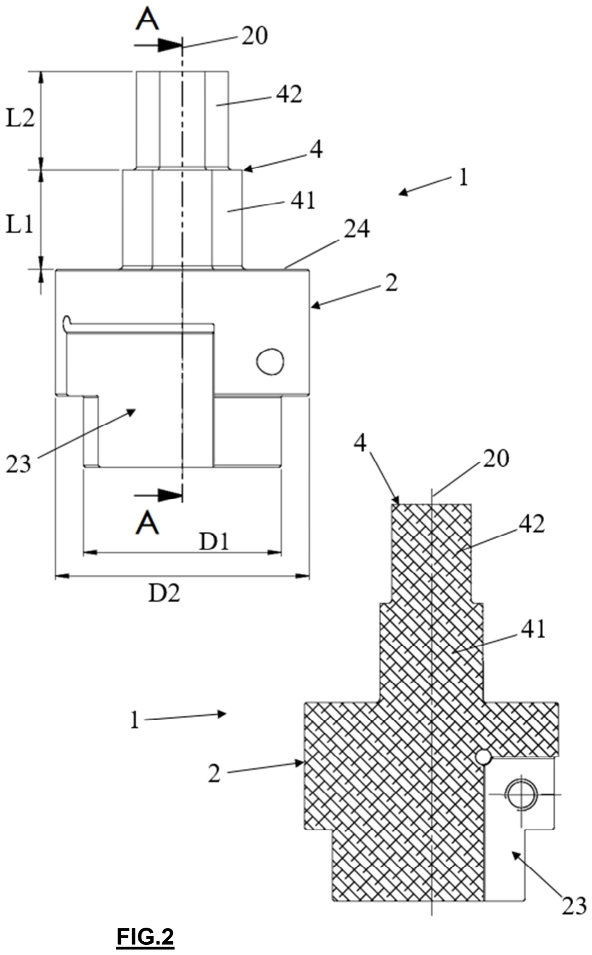

En référence à la Figure 2, la première section d'arbre hexagonal 41 présente une première longueur L1, comprise entre 10 et 20 millimètres, et par exemple entre 10 et 15 millimètres, et la seconde section d'arbre hexagonal 42 présente une seconde longueur L2 qui est équivalente à la première longueur L1 à plus ou moins 5 %. Ces longueurs L1, L2 sont les mêmes quel que soit l'outil d'alésage 1.

En référence à la Figure 3, la première largeur T1 peut être de 10 millimètres, et la seconde largeur T2 peut être de 13 millimètres, ces largeurs T1, T2 étant adaptés pour les deux tailles de mandrin classiques. Ces largeurs T1, T2 sont les mêmes quel que soit l'outil d'alésage 1.

Les outils d'alésage 1 des Figures 1, 4 et 5 sont de tailles différentes, du fait que leurs diamètres D1, D2, D10, D20, D100, D200 sont distincts, mais par contre leurs arbres d'accouplement 4 sont tous identiques (même longueur, mêmes dimensions). En effet, ces outils d'alésage 1 des Figures 1, 4 et 5 appartiennent à un kit d'alésage comprenant plusieurs outils d'alésage 1 (dont au moins les trois outils d'alésage 1 des Figures 1, 4 et 5), dans lequel le premier diamètre D1, D10, D100 de la première section cylindrique 21 de chacun des outils d'alésage 1 varie d'un outil d'alésage 1 à l'autre, mais par contre la disposition et la conformation (longueur, dimension, largeur) des arbres d'accouplement 4 sont identiques entre les outils d'alésage 1.

L'outil d'alésage 1 comprend une lame de coupe 3 (qui est par exemple une lame en carbure) qui est fixée sur la première section cylindrique 21 du corps 2, au niveau de l'entaille 23.

Plus précisément, la lame de coupe 3 est fixée dans un logement 28 ménagé en retrait dans l'un des pans 231 de l'entaille 23 ; ce logement 28 étant localisé à l'interface entre la première section cylindrique 21 et la seconde section cylindrique 22.

Cette lame de coupe 3 est fixée au moyen d'une vis 33 qui est vissée dans un trou taraudé 27 débouchant dans le logement 28, et débouchant aussi en périphérie de la première section cylindrique 21. La lame de coupe 3 est identique entre les outils d'alésage 1.

Cette lame de coupe 3 présente une arête de coupe 31 qui est sensiblement en affleurement avec une périphérie de la première section cylindrique 21 pour un alésage selon un diamètre d'alésage qui est sensiblement équivalent au premier diamètre D1 (ou D10 ou D100), c'est-à-dire que le diamètre d'alésage est égal au premier diamètre D1 (ou D10 oui D100) ou est égal au premier diamètre D1 (ou D10 ou D100) augmenté d'au maximum un ou deux millimètres. Cette arête de coupe 31 est parallèle à l'axe central 20.

Cette lame de coupe 3 présente une autre arête de coupe 32 qui est perpendiculaire à l'arête de coupe 31 et qui s'étend selon une direction radiale sur une largeur donnée qui est supérieure à l'écart entre le premier diamètre D1 (respectivement D10 ou D100) et le second diamètre D2 (respectivement D20 ou D200).

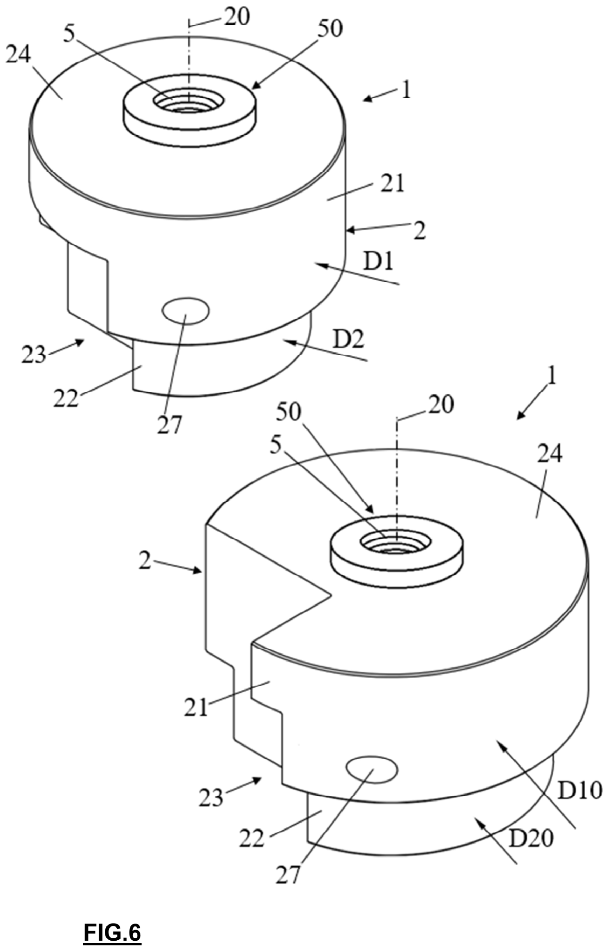

Dans une variante illustrée en Figure 6, un autre outil d'alésage 100 est semblable à l'outil d'alésage 1 décrit précédemment, en comportant un corps 2 présentant successivement une première section cylindrique 21 et une seconde section cylindrique 22 centrées sur un axe central 20, et une lame de coupe 3 fixée dans un logement 28 en retrait dans l'entaille 23. La différence est que cet autre outil d'alésage 100 ne comporte pas l'arbre d'accouplement 4, mais il comporte un orifice taraudé 5 ménagé dans le plateau 24 et centré sur l'axe central 20, pour former un moyen d'accouplement avec une tige filetée d'une disqueuse ou meuleuse à disque. Ainsi, cette tige filetée de la disqueuse ou meuleuse à disque est vissée dans l'orifice taraudé 5, afin ensuite de pouvoir entrainer en rotation cet outil d'alésage 100.

Comme visible sur la Figure 6, un manchon 50 est fixé solidairement sur le plateau 24, et de préférence ce manchon 50 vient de matière avec le corps 2, et l'orifice taraudé 5 est ménagé au moins en partie dans ce manchon 50.

Cet outil d'alésage 100 peut appartenir à un kit et ainsi être proposé dans plusieurs tailles, comme dans l'exemple de la Figure 6 avec deux outils d'alésage 100 de tailles distinctes, l'un ayant le premier diamètre D1 et le second diamètre D2, et l'autre ayant le premier diamètre D10 et le second diamètre D20.

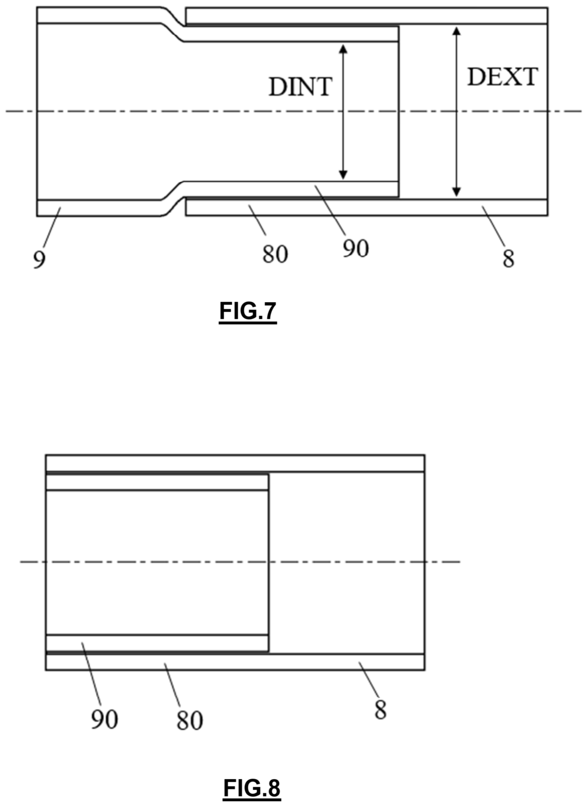

La suite de la description porte sur l'utilisation de l'outil d'alésage 1 par un opérateur, comme un plombier, en référence aux figures 7 à 11.

En référence à la figure 7, au début on a deux tuyaux plastique 8, 9, comme par exemple deux tuyaux PVC, qui sont assemblés bout à bout par collage. Le premier tuyau plastique 8 présente une extrémité femelle 80 tandis que le second tuyau plastique 9 présente une extrémité mâle 90 emboîtée et encollée à l'intérieur de l'extrémité femelle 80 du premier tuyau plastique 8.

L'extrémité mâle 90 a un diamètre externe DEXT sensiblement équivalent au diamètre interne de l'extrémité femelle 80, et par ailleurs l'extrémité mâle 90 a un diamètre interne DINT.

En référence à la figure 8, le plombier coupe l'extrémité mâle 90 du second tuyau plastique 9 à ras de l'extrémité femelle 80 du premier tuyau plastique 8. Il reste alors une portion de l'extrémité mâle 90 collée à l'intérieur de l'extrémité femelle 80, et c'est cette portion de l'extrémité mâle 90 que l'outil d'alésage 1 va pouvoir enlever.

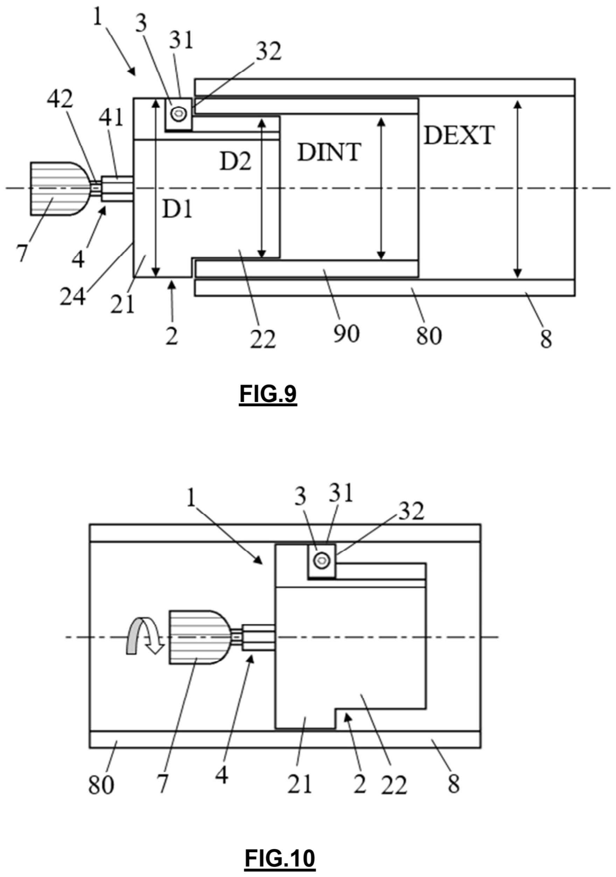

En référence à la figure 9, le plombier choisit l'un des outils d'alésage 1 de son kit d'alésage, en retenant l'outil d'alésage 1 dont le premier diamètre D1 est équivalent au diamètre externe DEXT de l'extrémité mâle 90, et dont le second diamètre D2 est équivalent au diamètre interne DINT de cette extrémité mâle 90.

Le plombier fixe l'outil d'alésage 1 sur le mandrin 7 de la perceuse en accouplant l'arbre d'accouplement 4 sur ce mandrin 7. Dans l'exemple illustré, c'est la seconde section d'arbre hexagonal 42 qui est montée dans le mandrin 7.

Si le plombier utilisait l'un des outils d'alésage 100 de la Figure 6, il aurait alors fixe l'outil d'alésage 100 sur la disqueuse ou meuleuse à disque, en vissant sa tige filetée dans l'orifice taraudé 5.

Ensuite, le plombier emboîte la seconde section cylindrique 22 à l'intérieur de la portion de l'extrémité mâle 90, centrant ainsi l'outil d'alésage 1.

En référence à la figure 10, le plombier actionne la perceuse pour mettre en rotation l'outil d'alésage 1, de sorte que la lame de coupe 3 rabote la portion de l'extrémité mâle 90, tout en avançant l'outil d'alésage 1 à l'intérieur du premier tuyau plastique 8, jusqu'à ce que l'outil d'alésage 1 rabote entièrement la portion de l'extrémité mâle 90.

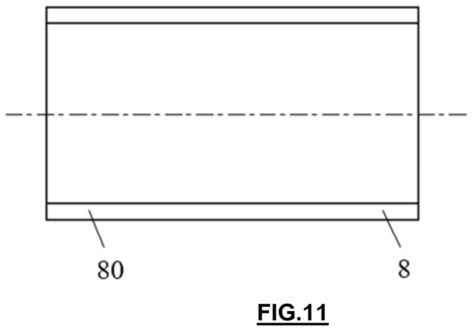

En référence à la figure 11, à la fin de l'opération et après avoir retiré l'outil d'alésage 1, l'extrémité femelle 80 du premier tuyau plastique 8 a retrouvé sensiblement son état initial, c'est-à-dire son état avant l'emboîtement et le collage du second tuyau plastique 2. Ainsi, cette extrémité femelle 80 peut à nouveau recevoir l'extrémité mâle d'un autre tuyau plastique.

## Revendications

1. Outil d'alésage (1) pour un tuyau plastique (8), comprenant :
- un corps (2) présentant successivement une première section cylindrique (21) et une seconde section cylindrique (22) centrées sur un axe central (20), dans lequel la première section cylindrique (21) présente un premier diamètre (D1 ; D10 ; D100) et la seconde section cylindrique (22) présente un second diamètre (D2 ; D20 ; D200) qui est inférieur au premier diamètre (D1 ; D10 ; D100), et dans lequel une entaille (23) est ménagée dans le corps (2) sur la première section cylindrique (21) et sur la seconde section cylindrique (22) ; et
- une lame de coupe (3) fixée sur la première section cylindrique (21) du corps (2), au niveau de l'entaille (23), dans lequel ladite lame de coupe (3) présente une arête de coupe (31) sensiblement en affleurement avec une périphérie de la première section cylindrique pour un alésage selon sensiblement le premier diamètre (D1 ; D10) ;
dans lequel la première section cylindrique (21) présente un plateau (24), opposé à la seconde section cylindrique (22), et sur lequel est prévu un moyen d'accouplement avec un outil, ledit moyen d'accouplement étant formé d'un arbre d'accouplement (4) pour un accouplement avec un mandrin (7 ; 70) d'une perceuse, dans lequel l'arbre d'accouplement (4) présente successivement en partant du plateau (24) :
- une première section d'arbre hexagonal (41) ayant une première largeur (T1) ; et
- une seconde section d'arbre hexagonal (42) ayant une seconde largeur (T2) inférieure à la première largeur (T1) ;
de sorte que ledit arbre d'accouplement (4) est adapté pour un accouplement avec deux mandrins (7) de tailles différentes.

2. Outil d'alésage (1) selon la revendication 1, dans lequel l'arbre d'accouplement (4) vient de matière avec le corps (2) pour former ensemble une pièce monobloc.

3. Outil d'alésage (1) selon la revendication 1 ou 2, dans lequel la première section d'arbre hexagonal (41) présente une première longueur (L1), et la seconde section d'arbre hexagonal (42) présente une seconde longueur (L2) qui est équivalente à la première longueur (L1) à plus ou moins 5 %.

4. Outil d'alésage (1) selon la revendication 3, dans lequel la première longueur (L1) est comprise entre 10 et 20 millimètres, et par exemple entre 10 et 15 millimètres.

5. Outil d'alésage (100) pour un tuyau plastique (8), comprenant :
- un corps (2) présentant successivement une première section cylindrique (21) et une seconde section cylindrique (22) centrées sur un axe central (20), dans lequel la première section cylindrique (21) présente un premier diamètre (D1 ; D10) et la seconde section cylindrique (22) présente un second diamètre (D2 ; D20) qui est inférieur au premier diamètre (D1 ; D10), et dans lequel une entaille (23) est ménagée dans le corps (2) sur la première section cylindrique (21) et sur la seconde section cylindrique (22) ; et
- une lame de coupe (3) fixée sur la première section cylindrique (21) du corps (2), au niveau de l'entaille (23), dans lequel ladite lame de coupe (3) présente une arête de coupe (31) sensiblement en affleurement avec une périphérie de la première section cylindrique pour un alésage selon sensiblement le premier diamètre (D1) ;
dans lequel la première section cylindrique (21) présente un plateau (24), opposé à la seconde section cylindrique (22), et sur lequel est prévu un moyen d'accouplement avec un outil, ledit moyen d'accouplement étant formé d'un orifice taraudé (5) pour un accouplement avec une tige filetée d'une disqueuse ou meuleuse à disque.

6. Outil d'alésage (100) selon la revendication 5, comprenant un manchon fixé solidairement sur le plateau (24) et dans lequel est ménagé l'orifice taraudé.

7. Outil d'alésage (1 ; 100) selon l'une quelconque des revendications précédentes, dans lequel le corps (2) est réalisé dans un matériau plastique, un matériau composite, un matériau à base de résine ou un matériau métallique, comme par exemple de l'aluminium.

8. Outil d'alésage (1 ; 100) selon l'une quelconque des revendications précédentes, dans lequel le premier diamètre (D1 ; D10 ; D100) et le second diamètre (D2 ; D20 ; D200) sont choisis parmi les couples de diamètres suivants, à plus ou moins 1 millimètre :
- premier diamètre = 32 millimètres et second diamètre = 25 millimètres ;
- premier diamètre = 40 millimètres et second diamètre = 33 millimètres ;
- premier diamètre = 42,6 millimètres et second diamètre = 50 millimètres ;
- premier diamètre = 50 millimètres et second diamètre = 43 millimètres ;
- premier diamètre = 53,6 millimètres et second diamètre = 63 millimètres ;
- premier diamètre = 63 millimètres et second diamètre = 56 millimètres ;
- premier diamètre = 80 millimètres et second diamètre = 73 millimètres ;
- premier diamètre = 90 millimètres et second diamètre = 83 millimètres ;
- premier diamètre = 100 millimètres et second diamètre = 93 millimètres ;
- premier diamètre = 110 millimètres et second diamètre = 103 millimètres ;
- premier diamètre = 125 millimètres et second diamètre = 118 millimètres ;
- premier diamètre = 160 millimètres et second diamètre = 153 millimètres.

9. Kit d'alésage comprenant plusieurs outils d'alésage (1 ; 100) selon l'une quelconque des revendications 1 à 8, dans lequel le premier diamètre (D1 ; D10 ; D100) de la première section cylindrique (21) de chacun des outils d'alésage (1 ; 100) varie d'un outil d'alésage (1 ; 100) à l'autre, le moyen d'accouplement (4 ; 5) étant identique dans sa forme et dans ses dimensions entre les outils d'alésage (1).

10. Kit d'alésage selon la revendication 9, dans lequel le premier diamètre (D1 ; **D10** ; D100) et le second diamètre (D2 ; D20 ; D200) d'au moins deux des outils d'alésage (1 ; 100) du kit d'alésage sont choisis parmi les couples de diamètres suivants, à plus ou moins 1 millimètre :
- premier diamètre = 32 millimètres et second diamètre = 25 millimètres ;
- premier diamètre = 40 millimètres et second diamètre = 33 millimètres ;
- premier diamètre = 42,6 millimètres et second diamètre = 50 millimètres ;
- premier diamètre = 50 millimètres et second diamètre = 43 millimètres ;
- premier diamètre = 53,6 millimètres et second diamètre = 63 millimètres ;
- premier diamètre = 63 millimètres et second diamètre = 56 millimètres ;
- premier diamètre = 80 millimètres et second diamètre = 73 millimètres ;
- premier diamètre = 90 millimètres et second diamètre = 83 millimètres ;
- premier diamètre = 100 millimètres et second diamètre = 93 millimètres ;
- premier diamètre = 110 millimètres et second diamètre = 103 millimètres ;
- premier diamètre = 125 millimètres et second diamètre = 118 millimètres ;
- premier diamètre = 160 millimètres et second diamètre = 153 millimètres.
